# EUROPEAN PATENT APPLICATION

(11) **EP 3 361 795 A1**
(43) Date of publication of application: **15.08.2018**
(21) Application number: 17155455.3
(22) Date of filing: 09.02.2017
(51) Int. Cl.: H04W 64/00

(54) **SECURE MEANS FOR DETERMINING A GEOGRAPHICAL RELATIONSHIP BETWEEN TWO DEVICES**

(71) Applicant: SNIPS, 75002 Paris (FR)
(72) Inventor: Dahl-Jorgensen, Morten, 75002 Paris (FR)
(74) Representative: Verriest, Philippe

(57) **Abstract**

The invention concerns means for determining and sharing, in real-time, a geographical relationship according to a first position L_{A} of a first device and a second position L_{B} of the second device, while protecting the privacy. More particularly, the invention concerns means for sharing, to a second device, the geographical relationship, and comprising:
• means for obtaining a first encrypted position eL_{A} determined by using an encryption algorithm ENC of the cryptographic framework CF to encrypt the first position L_{A};
• means for obtaining a second encrypted position eL_{B} determined by using the encryption algorithm ENC of the cryptographic framework CF to encrypt the second position L_{B};
• means for determining an encrypted geographical relationship, using a computational algorithm COMP of the cryptographic framework CF, and according to the first encrypted position eL_{A} and the second encrypted position eL_{B};
• means for sending the encrypted geographical relationship to the second device.

## Description

The present invention generally relates to secure means for determining a geographical relationship between two devices. More particularly, the invention relates to means for determining and sharing a geographical relationship between two devices, while protecting the privacy of geographical information related to the two devices.

Known solutions for determining and sharing a geographical relationship between two devices, for example a distance, offer weak privacy protection.

For instance, it is known to transfer to a service provider, through a point-to-point encrypted communication channel, the current position of a mobile device. Once the current position of the mobile device is received, a distance to another position such as a point of interest or another mobile device may be computed and shared using the infrastructure of the service provider. However, the current position is disclosed to the service provider, which may raise privacy concerns. In case of a breach in the security of the infrastructure of the service provider, the confidentiality of said sensitive data may be jeopardized.

Moreover, existing solutions typically require access to exact locations of mobile devices, thereby limiting their privacy level. For example, if a distance measurement between a first and a second mobile must be determined and shared between said devices, known solutions require the first mobile to send its current position before computing and sending the distance measurement to the second mobile device.

It is therefore still desirable to provide means for determining, preferably in real-time, and with a high level of privacy, a geographical relationship f(L_{A}, L_{B}) according to a position L_{A} of a first device A and a position L_{B} of a second device B, and, for sharing said geographical relationship f(L_{A}, L_{B}) to the second device B, without revealing:
- the positions L_{A} to any third parties; nor,
- the position L_{A} to the second device B ;
even if the first device A or the second device B have limited means of direct communication to a service provider.

To that end, according to a first aspect, the present invention concerns a method, adapted to be executed by a geographical relationship processing module, for sharing, to a second device, a geographical relationship according to a first position L_{A} of a first device and a second position L_{B} of the second device , and comprising the following steps:
- during a first step, obtaining a first encrypted position eL_{A} determined by using an encryption algorithm ENC of a cryptographic framework CF for secure computation to encrypt the first position L_{A};
- during a second step, obtaining a second encrypted position eL_{B} determined by using the encryption algorithm ENC of the cryptographic framework CF to encrypt the second position L_{B};
- during a third step, determining an encrypted geographical relationship, using a computational algorithm COMP of the cryptographic framework CF, and according to the first encrypted position eL_{A} and the second encrypted position eL_{B};
- during a fourth step, sending the encrypted geographical relationship to the second device.

In an embodiment, a second public key P2K and a second secret key S2K generated with the cryptographic framework CF for secure computation are associated to the second device. During the first step, the first encrypted position eLA is determined by using the encryption algorithm ENC of the cryptographic framework CF to encrypt the first position LA according to the second public key P2K. During the second step, the second encrypted position eL_{B} is determined by using the encryption algorithm ENC of the cryptographic framework CF to encrypt the second position L_{B} according to the second secret key S2K.

The present invention also concerns a method, adapted to be executed by a second device, to determine a geographical relationship according to a first position L_{A} of a first device and a second position L_{B} of the second device,, and comprising the following steps:
- during a first step, determining a second encrypted position eL_{B} determined by using an encryption algorithm ENC of a cryptographic framework CF for secure computation to encrypt the second position L_{B}, and sending the second encrypted position eL_{B} ;
- during a second step, receiving an encrypted geographical relationship, determined by using a computational algorithm COMP of the cryptographic framework CF, and according to:
   ∘ a first encrypted position eL_{A} determined by using the encryption algorithm ENC of the cryptographic framework CF to encrypt the first position L_{A}; and;
   ∘ the second encrypted position eL_{B};
- during a third step, determining the geographical relationship, using a decryption algorithm DEC of the cryptographic framework CF to decrypt the encrypted geographical relationship.

According to an embodiment, a second public key P2K and a second secret key S2K generated with the cryptographic framework CF for secure computation are associated to the second device. During the first step, the second encrypted position eLB is determined using the encryption algorithm ENC of the cryptographic framework CF to encrypt the second position LB according to the second secret key. During the second step, the encrypted geographical relationship, is determined by using the computational algorithm COMP of the cryptographic framework CF, and according to
- the first encrypted position eLA determined by using the encryption algorithm ENC of the cryptographic framework CF to encrypt the first position LA according to the second public key P2K; and;
   ∘ the second encrypted position (eLB).

During the third step, the geographical relationship is determined, using the decryption algorithm DEC of the cryptographic framework CF to decrypt the encrypted geographical relationship, according to the second public key P2K and the second secret key S2K.

The cryptographic framework CF for secure computation-also known as secure multi-party computation framework or multi-party computation framework-, is for example generally described in the Wikipedia Article accessible at the following address [https://en.wikipedia.org/wiki/Secure_multi-party_computation]. Examples of suitable cryptographic framework CF for secure computation are in particular discussed in the document [ABPP16] David W. Archer, Dan Bogdanov, Benny Pinkas, and Pille Pullonen, Maturity and performance of programmable secure computation, IEEE Security and Privacy, 14(5):48-56, Sept 2016. In particular, the cryptographic frameworks CF may be a cryptographic frameworks as described for example in the document [CDN00] Cramer, Damgaard, Nielsen: Multiparty Computation from Threshold Homomorphic Encryption, or [ABPP16] Archer, Bogdanov, Pinkas, Pullonen: Maturity and Performance of Programmable Secure Computation.

Thanks to the method according to the first aspect, only encrypted data are shared between the first device, the second device and the geographical relationship processing module. In fact, only ciphered information are exchanged. Moreover each device - the first device, the second device and the geographical relationship processing module - never sees the function inputs. Each device only sees its own data and the geographical relationship.

Due to the potential limited communication abilities of the first and/or second device, a cloud-based service may be used to exchange information. For example, the geographical relationship processing module may be hosted on an infrastructure of a cloud-based service provider. However, the geographical relationship processing module may also be located in the second device, or in a device accessible by the first device and the second device.

According to an embodiment, the first encrypted position eL_{A} may be determined according to an inaccurate first position iL_{A} related to the first position. The inaccurate first position iL_{A} is for example obtained by adding to the first position L_{A} a varying imprecision and/or by adding specific noise as described for example in the document [DR14] Dwork, Roth: The Algorithmic Foundations of Differential Privacy. Providing an inaccurate position as opposed to an accurate position offers a further level of privacy.

The second encrypted position eL_{B} may be determined according to an inaccurate second position eL_{B} related to the second position. The inaccurate second position iL_{B} is for example obtained by adding to the second position L_{B} a varying imprecision and/or by adding specific noise as described for example in the document [DR14] Dwork, Roth: The Algorithmic Foundations of Differential Privacy.

The geographical relationship may be a distance between the first position L_{A} and the second position L_{B}. The computational algorithm COMP of the cryptographic framework CF may use a public-key cryptosystem. Said cryptosystem may be homomorphic.
For example, a public-key homomorphic cryptosystem based on composite degree residuosity classes, such as the special protocol described in the document [Paillier99] Paillier: Public-Key Cryptosystems Based on Composite Degree Residuosity Classes may be used.

According to a second aspect, the present invention also relates to a computer program that can be downloaded from a communication network and/or stored on a medium. This computer program comprises instructions for causing implementation of the method according to the first aspect, when said program is run by the processor.

According to a third aspect, the present invention also relates to information storage means, storing a computer program comprising a set of instructions causing implementation of the method according to the first aspect, when the stored information is read from said information storage means and run by a processor.

According to a fourth aspect, the present invention also concerns a geographical relationship processing module, configured to share, to a second device, a geographical relationship according to a first position L_{A} of a first device and a second position L_{B} of the second device, and comprising:
- means for obtaining a first encrypted position eL_{A} determined by using an encryption algorithm ENC of a cryptographic framework CF for secure computation to encrypt the first position L_{A};
- means for obtaining a second encrypted position eL_{B} determined by using the encryption algorithm ENC of the cryptographic framework CF to encrypt the second position L_{B};
- means for determining an encrypted geographical relationship, using a computational algorithm COMP of the cryptographic framework CF,;
- means for sending the encrypted geographical relationship to the second device.

According to a fifth aspect, the present invention also concerns a second device, configured to determine a geographical relationship according to a first position L_{A} of a first device and a second position L_{B} of said second device,, and comprising:
- means for determining a second encrypted position eL_{B} determined by using an encryption algorithm ENC of a cryptographic framework CF for secure computation to encrypt the second position L_{B};
- means for receiving an encrypted geographical relationship, determined by the geographical relationship processing module using a computational algorithm COMP of the cryptographic framework CF, and according to:
   ∘ a first encrypted position eL_{A} determined by using the encryption algorithm ENC of the cryptographic framework CF to encrypt the first position L_{A}; and;
   ∘ the second encrypted position eL_{B};
- means for determining the geographical relationship, using a decryption algorithm DEC of the cryptographic framework CF to decrypt the encrypted geographical relationship.

According to a sixth aspect, the present invention also concerns a system comprising a geographical relationship processing module according to the fourth aspect, and a second device according to the fifth aspect.

The system may further comprising a first device provided with:
- means for determining a first encrypted position eL_{A} determined by using the encryption algorithm ENC of the cryptographic framework CF to encrypt the first position LA;
- means for sending the first encrypted position to the geographical relationship processing module.

The characteristics of the invention will emerge more clearly from the following description of an example of an embodiment of the invention, said description being made with reference to the accompanying drawings, among which:
Fig.1 schematically represents a system according to the present invention;
Fig. 2 schematically represents the architecture of a mobile device;
Fig.3 schematically represents a method for determining information related to past activities of a user.

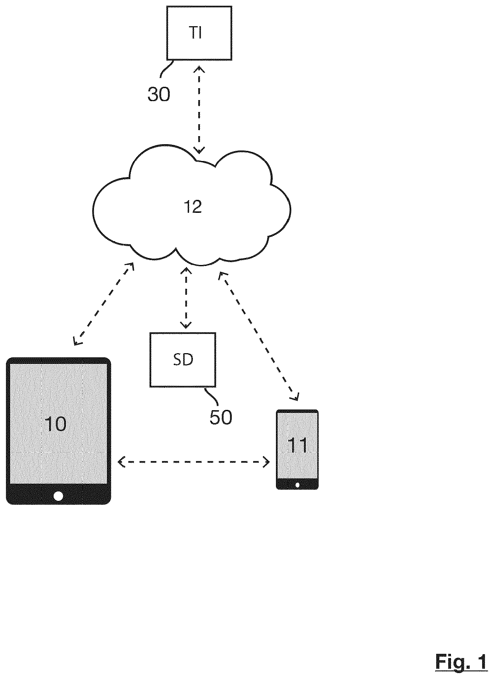

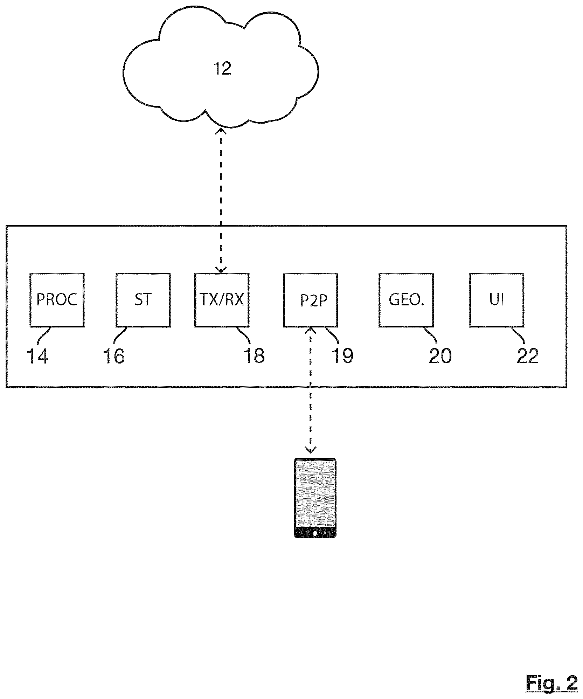

Now we refer to Fig. 1 and Fig. 2. As represented on Fig. 1, the system according to an embodiment of the present invention comprises a first device 10, at least one second device 11, and a geographical relationship processing module 50. The second device 11 may be a mobile device, a computer, a connected object or any processing device.

The system according to the present invention also comprises a trusted infrastructure 30, configured to handle cryptographic public keys, accessible and trusted by the first device and by the second device. A first public key P1K and a first secret key S1K are associated to the first device 10. A second public key P2K and a second secret key S2K are associated to the second device 10. The trusted infrastructure 30 is adapted to store the first public key P1K and the second public key P2K. A cryptographic framework CF for secure computation-also known as secure multi-party computation framework or multi-party computation framework-, as generally described for example in the Wikipedia Article accessible at the following address [https://en.wikipedia.org/wiki/Secure_multi-party_computation], is used to generate the first public key P1K, the first secret key S1K, the second public key P2K and the second secret key S2K. In particular, suitable cryptographic frameworks CF is described for example in the document [CDN00] Cramer, Damgaard, Nielsen: Multiparty Computation from Threshold Homomorphic Encryption, or [ABPP16] Archer, Bogdanov, Pinkas, Pullonen: Maturity and Performance of Programmable Secure Computation. In one embodiment, the trusted infrastructure 30 is coupled to a communication network 12.

As represented in Fig. 1, the geographical relationship processing module 50 may be comprised in a processing device coupled to the communication network 12, for example in a computing infrastructure of a service provider. Alternatively, the geographical relationship processing module 50 may be comprised in the second device 11.

A typical embodiment of the first device 10 and/or the second device 11 is now described. The first device and/or the second device is/are for example a mobile device adapted to access to the communication network 12. The mobile device further comprises a processing module 14, for example a module provided with at least one Central Processing Unit and a Random-Access Memory. The mobile device further comprises storage means 16, for example a Hard-Drive and/or a solid-state memory, for storing data and allowing the processing module 14 to read and/or write said data. The mobile device includes at least one communication interface 18 adapted to allow access to the communication network 12. In one embodiment, the communication network 12 is coupled to the Internet. The communication interface 18 may also be adapted to allow the mobile device to send data to and/or receive data to other devices, through the communication network 12. The mobile device may also comprise a direct communication interface 19, configured to send data to and/or receive data from another device. More particularly, the direct communication interface 19 may be configured to setup a point-to-point communication channel-for instance a Bluetooth communication channel-between mobile devices. The direct communication interface 19 may also comprise means for accessing a local communication network to which other mobile devices are coupled. The mobile device 10 further comprises a geolocalization module 20 coupled to the processing module and configured to allow the determination of the current geographical position of the mobile device when turned on and/or activated. The geolocalization module 20 may comprise means for determining the current geographical position using GPS, Galileo, beacons and/or WIFI means. The geolocalization module 20 is adapted to deliver a stream of data related to the current location of the mobile device in real time. Data representing the current location comprise typically information related to the latitude, information related to the longitude and an associated level of uncertainty-typically a distance in metres from the estimated latitude and longitude, representing two standard deviations. The mobile device further comprises a user-interface 22, provided for example with a touch-sensitive screen, sensors and an audio playback and recording interface. The processing module 14 is capable of executing instructions.

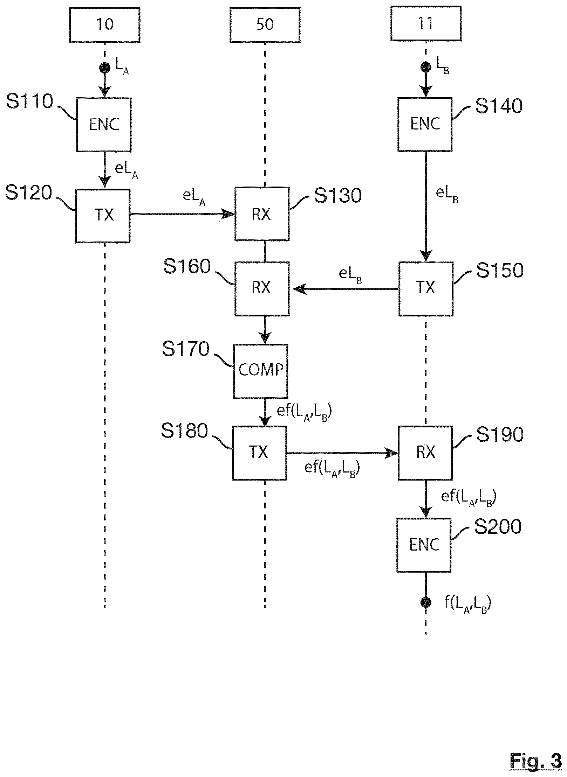

Any and all steps of the method described hereafter with regard to figure 3, may be implemented in software by execution of a set of instructions or program by a programmable computing machine, such as a PC (*Personal Computer*), a DSP (*Digital Signal Processor*) or a micro-controller; or else implemented in hardware by a machine or a dedicated component, such as an FPGA (*Field-Programmable Gate Array*) or an ASIC (*Application-Specific Integrated Circuit*).

Figure 3 schematically represents a method for determining and sharing a geographical relationship f(L_{A}, L_{B}) according to a position L_{A} of the first device 10 and a position L_{B} of the second device 11. The position L_{A} of the first device 10 may be determined or obtained. For example, the geolocalization module 20 may be used to determine the position L_{A}. The position L_{A} may also be obtained by an entry of a user, or by any method suitable to determine an actual or a predicted position L_{A} of the first device 10. The position L_{A} is considered as a private information related to the first device 10, and consequently is supposed to be accessible only through the first device 10. As a consequence, in particular, the position L_{A} should neither be disclosed to the geographical relationship processing module 50, nor to the second device 11. The position L_{B} of the second device 11 may be determined or obtained. For example, the geolocalization module 20 may be used to determine the position L_{B}. The position L_{B} may also be obtained by an entry of a user, or by any method suitable to determine an actual or a predicted position L_{B} of the second device 10. The position L_{B} is considered as a private information related to the second device 10, and consequently is supposed to be accessible only through the second device 10.

During a step S110, a first encrypted position eL_{A} is calculated, by the first mobile device 10, using an encryption algorithm ENC of the cryptographic framework CF to encrypt the first position L_{A} according to the second public key P2K of the second device 11. The second public key P2K can be obtained in particular from the trusted infrastructure 30.

In an embodiment of the step S110, to further improve the level of protection of the privacy, the first encrypted position eL_{A} is calculated, using the encryption algorithm ENC to encrypt an inaccurate first position iL_{A} according to the second public key P2K of the second device 11. The inaccurate first position iL_{A} is for example obtained by adding to the first position L_{A} a varying imprecision and/or by adding specific noise as described for example in the document [DR14] Dwork, Roth: The Algorithmic Foundations of Differential Privacy.

During a step S120, the first encrypted position eL_{A} is sent or made available, by the first device 10, to the geographical relationship processing module 50.

During a step S130, the first encrypted position eL_{A} is obtained by the geographical relationship processing module 50.

In an embodiment, during the third step S130, the encrypted position eL_{A} is stored for later use. Consequently, it is possible to postpone the execution of the following step of the method according to the invention,at a later point in time where the first device 10 is for example not coupled anymore to the communication network 12.

During a step S140, a second encrypted position eL_{B} is calculated, by the second device 11, using the encryption algorithm ENC of the cryptographic framework CF, and according to the second secret key S2K of the second device 11. The second secret key S2K is typically stored on the second device 11 or accessible through the second device 11.

In an embodiment of the step S140, to further improve the level of protection of the privacy, the second encrypted position eL_{B} is calculated, using the encryption algorithm ENC to encrypt an inaccurate second position iL_{B} according to the second secret key S2K of the second device 11. The inaccurate second position iL_{B} is for example obtained by adding to the second positon L_{B} a varying imprecision and/or by adding specific noise as described for example in the document [DR14] Dwork, Roth: The Algorithmic Foundations of Differential Privacy.

During a step S150, the second encrypted position eL_{B} is sent or made available, by the second device 11, to the geographical relationship processing module 50.

During a step S160, the second encrypted position eL_{B} is obtained by the geographical relationship processing module 50.

During a step S170, after having received the first encrypted position eL_{A} and the second encrypted position eL_{B}, an encrypted geographical relationship ef(L_{A}, L_{B}) is calculated, by the geographical relationship processing module 50, using a computational algorithm COMP of the cryptographic framework CF, and according to the first encrypted position eL_{A} and the second encrypted position eL_{B}.

In an embodiment, during the step S170, the geographical relationship f(L_{A}, L_{B}) is a distance between the first position L_{A} and the second position L_{B}. To improve efficiency, the computational algorithm COMP of the cryptographic framework CF may use a special protocol, for example the special protocol described in the document [Paillier99] Paillier: Public-Key Cryptosystems Based on Composite Degree Residuosity Classes.

During a step S180, the encrypted geographical relationship ef(L_{A}, L_{B}) is sent or made available, by the geographical relationship processing module 50, to the second device 11.

During a step S190, the encrypted geographical relationship ef(L_{A}, L_{B}) is obtained by the second device 11.

During a step S200, the geographical relationship f(L_{A}, L_{B}) is calculated, by the second device 11, using a decryption algorithm DEC of the cryptographic framework CF, and according to the encrypted geographical relationship ef(L_{A}, L_{B}).

In an embodiment, if the geographical relationship f(L_{A}, L_{B}) has to be made available to the first device 10, all the previously described steps are repeated, swapping the role of the first device and the second device.

The steps of the method according to the invention can be executed when the first device 10, the second device 11 and the geographical relationship processing module 50 are coupled, for example when a communication link is established using the communication interface 18 and/or the direct communication interface 19. However, the first device 10, the second device 11 and the geographical relationship processing module 50 may also implement the steps of the method according to the invention by directly using the cryptographic framework CF. The only requirement is that a communication link exists between them when device B wants to compute the distance.

## Claims

1. Method, adapted to be executed by a geographical relationship processing module (50), for sharing, to a second device (11), a geographical relationship according to a first position (LA) of a first device (10) and a second position (LB) of a second device (11), comprising the following steps:
• during a first step (S130), obtaining a first encrypted position (eL_{A}) determined by using an encryption algorithm (ENC) provided by a cryptographic framework (CF) for secure computation to encrypt the first position;
• during a second step (S160), obtaining a second encrypted position (eL_{B}) determined by using the encryption algorithm (ENC) of the cryptographic framework (CF) to encrypt the second position (L_{B});
• during a third step (S170), determining an encrypted geographical relationship, by using a computational algorithm (COMP) of the cryptographic framework (CF), and according to the first encrypted position (eL_{A}) and the second encrypted position (eL_{B}) ;
• during a fourth step (S180), sending the encrypted geographical relationship to the second device (11).

2. Method, according to claim 1, wherein a second public key (P2K) and a second secret key (S2K) generated with the cryptographic framework (CF) for secure computation are associated to the second device (11), and wherein:
during the first step (S130), the first encrypted position (eLA) is determined by using the encryption algorithm (ENC) of the cryptographic framework (CF) to encrypt the first position (LA) according to the second public key (P2K);
during the second step (S160), the second encrypted position (eL_{B}) is determined by using the encryption algorithm (ENC) of the cryptographic framework (CF) to encrypt the second position (L_{B}) according to the second secret key (S2K).

3. Method, adapted to be executed by a second device (11), to determine a geographical relationship according to a first position (L_{A}) of a first device (10) and a second position (L_{B}) of the second device (11), and comprising the following steps:
• during a first step (S140), determining a second encrypted position (eL_{B}) by using an encryption algorithm (ENC) of a cryptographic framework (CF) for secure computation to encrypt the second position (L_{B}), and sending (S150) the second encrypted position (eL_{B}) to a geographical relationship processing module (50);
• during a second step (S190), receiving an encrypted geographical relationship, determined by using a computational algorithm (COMP) of the cryptographic framework (CF), and according to:
∘ a first encrypted position (eL_{A}) determined by using the encryption algorithm (ENC) of the cryptographic framework (CF) to encrypt the first position (L_{A}); and;
∘ the second encrypted position (eL_{B});
• during a third step (S200), determining the geographical relationship, using a decryption algorithm (DEC) of the cryptographic framework (CF) to decrypt the encrypted geographical relationship.

4. Method according to claim 3, wherein a second public key (P2K) and a second secret key (S2K) generated with the cryptographic framework (CF) for secure computation being associated to the second device (11), and wherein:
• during the first step (S140), the second encrypted position (eL_{B}) is determined using an encryption algorithm (ENC) of the cryptographic framework (CF) to encrypt the second position (L_{B}) according to the second secret key (S2K)
• during the second step (S190), the encrypted geographical relationship, is determined by using the computational algorithm (COMP) of the cryptographic framework (CF), and according to:
∘ the first encrypted position (eL_{A}) determined by using the encryption algorithm (ENC) of the cryptographic framework (CF) to encrypt the first position (L_{A}) according to the second public key (P2K); and;
∘ the second encrypted position (eL_{B});
• during the third step (S200), determining the geographical relationship, using the decryption algorithm (DEC) of the cryptographic framework (CF) to decrypt the encrypted geographical relationship, according to the second public key (P2K) and the second secret key (S2K).

5. Method according to any one of the preceding claims, wherein the first encrypted position (eL_{A}) is determined according to an inaccurate first position (iL_{A}) related to the first position.

6. Method according to any one of the preceding claims, wherein the second encrypted position (eL_{B}) is determined according to an inaccurate second position (eL_{B}) related to the second position.

7. Method according to any one of the preceding claims, wherein the geographical relationship is a distance between the first position (L_{A}) and the second position (L_{B}).

8. Method according to any one of the preceding claims, wherein the computational algorithm (COMP) of the cryptographic framework (CF) uses a public-key cryptosystem.

9. Computer program comprising instructions for causing implementation of the method according to any one of the claims 1 to 8, when said program is run by the processor.

10. Support for storing a computer program comprising a set of instructions causing implementation of the method according to any one of the claims 1 to 8, when the stored information is read from said support and run by a processor.

11. Geographical relationship processing module (50), configured to share, to a second device (11), a geographical relationship according to a first position (L_{A}) of a first device (10) and a second position (L_{B}) of the second device (11), and comprising:
• means for obtaining a first encrypted position (eL_{A}) determined by using an encryption algorithm (ENC) of the cryptographic framework (CF) to encrypt the first position (L_{A}) ;
• means for obtaining a second encrypted position (eL_{B}) determined by using the encryption algorithm (ENC) of the cryptographic framework (CF) to encrypt the second position (L_{B});
• means for determining an encrypted geographical relationship, using a computational algorithm (COMP) of the cryptographic framework (CF), and according to the first encrypted position (eL_{A}) and the second encrypted position (eL_{B});
• means for sending the encrypted geographical relationship to the second device (11).

12. Second device (11), configured to determine a geographical relationship according to a first position (L_{A}) of a first device (10) and a second position (L_{B}) of said second device (11), and comprising:
• means for determining a second encrypted position (eL_{B}) determined by using an encryption algorithm (ENC) of a cryptographic framework (CF) for secure computation to encrypt the second position (L_{B}) ;
• means for receiving an encrypted geographical relationship, determined by using a computational algorithm (COMP) of the cryptographic framework (CF), and according to:
∘ a first encrypted position (eL_{A}) determined by using the encryption algorithm (ENC) of the cryptographic framework (CF) to encrypt the first position (L_{A}); and;
∘ the second encrypted position (eL_{B});
• means for determining the geographical relationship, using a decryption algorithm (DEC) of the cryptographic framework (CF) to decrypt the encrypted geographical relationship.

13. System comprising a geographical relationship processing module according to claim 11, and a second device according to claim 12.

14. System according to claim 13, further comprising a first device (10) provided with:
• means for determining a first encrypted position (eLA) determined by using the encryption algorithm (ENC) of the cryptographic framework (CF) to encrypt the first position (LA);
• means for sending the first encrypted position to the geographical relationship processing module (50).
